# EUROPÄISCHE PATENTSCHRIFT

(11) **EP 3 209 603 B1**
(45) Veröffentlichungstag und Bekanntmachung des Hinweises auf die Patenterteilung: **07.06.2023**
(21) Anmeldenummer: 15785078.5
(22) Anmeldetag: 16.10.2015
(51) Int. Cl.: C01B 17/02

(54) **VORRICHTUNG UND VERFAHREN ZUM KÜHLEN EINES FLUIDS**
DEVICE AND METHOD FOR COOLING A FLUID
DISPOSITIF ET PROCÉDÉ POUR REFROIDIR UN FLUIDE

(30) Priorität: 23.10.2014 DE 102014221497
(43) Veröffentlichungstag der Anmeldung: 30.08.2017
(73) Patentinhaber: IPCO Germany GmbH, 70736 Fellbach (DE)
(72) Erfinder: SUN, Dehua, 71522 Backnang (DE)
(74) Vertreter: Patentanwälte Ruff, Wilhelm, Beier, Dauster & Partner mbB
(86) Internationale Anmeldenummer: PCT/EP2015/073994
(87) Internationale Veröffentlichungsnummer: WO 2016/062628

(56) Entgegenhaltungen:
- GB-A- 1 377 980
- JP-A- 2012 063 067
- KR-A- 20030 023 790
- KR-B1- 101 368 766
- US-A- 1 467 867
- US-A- 1 742 391
- US-A- 4 139 347
- US-A1- 2001 011 460

## Beschreibung

Die Erfindung betrifft ein Verfahren zum Kühlen eines in einem vordefinierten Temperaturbereich verfestigenden Fluids, insbesondere einer Schmelze, mit den Schritten Leiten des Fluids durch wenigstens eine Rohrleitung eines Kühlers, wobei die Rohrleitung von einem Kühlmedium umgeben ist, und Erfassen einer Temperatur des Fluids im Bereich der Rohrleitung.

Die US 2001/0011460 A1 offenbart eine Eismaschine mit einem Füllrohr, um Wasser in einen Hohlraum der Eismaschine zuzuführen. Das Füllrohr weist eine Heizeinrichtung auf, um jegliche Ansammlung von Eis zu schmelzen, die sich während des Betriebs im Füllrohr ansammeln kann.

Die GB 1 377 980 offenbart eine Vorrichtung für die Herstellung von Bitumenblöcken.

Die US 1,742,391 offenbart eine Vorrichtung zum Verfestigen von Schwefel.

Die JP 2012-63067 A offenbart eine Vorrichtung zum Kühlen von Pressluft, mehrere U-förmig gebogene Rohre, durch die Kühlwasser geführt wird, erstrecken sich in einem Kühlraum hinein, durch den die Pressluft geleitet wird.

Das Dokument KR 101 368 766 B1 offenbart ein Verfahren, wobei Wasser in einer Rohrleitung gekühlt wird. Die Temperatur des Wassers wird im in der Rohrleitung erfasst. Das Wasser wird mittels einer Heizeinrichtung, die innerhalb der Rohrleitung angeordnet ist, aufgeheizt, wenn das Wasser in der Rohrleitung eine vordefinierte Temperatur unterschreitet.

Mit der Erfindung soll ein Verfahren zum Kühlen eines in einem vordefinierten Temperaturbereich verfestigenden Fluids verbessert werden.

Erfindungsgemäß ist hierzu ein Verfahren mit den Merkmalen von Anspruch 1 vorgesehen. Vorteilhafte Weiterbildungen sind in den Unteransprüchen angegeben.

Eine Vorrichtung zum Kühlen eines in einem vordefinierten Temperaturbereich verfestigenden Fluids, insbesondere einer Schmelze ist, mit einem Kühlraum zum Aufnehmen oder Durchleiten eines Kühlmediums, mit wenigstens einer Rohrleitung für das Fluid, die wenigstens abschnittsweise innerhalb des Kühlraums angeordnet ist, und mit wenigstens einer innerhalb der Rohrleitung angeordneten Heizeinrichtung versehen.

Beim Kühlen von Fluiden, die in einem vordefinierten Temperaturbereich verfestigen, muss stets darauf geachtet werden, dass das Fluid nicht innerhalb des Kühlers selbst verfestigt, sondern nur so weit gekühlt wird, dass es noch fließfähig bleibt. Auch das teilweise Verfestigen ist kritisch, da Ablagerungen auf lange Sicht zu Verstopfungen des Kühlers führen können. Besonders kritisch ist ein solches Verfestigen innerhalb des Kühlers bei Schmelzen und insbesondere beim Abkühlen einer Schwefelschmelze. Zum Pastillieren von Schwefel ist es optimal, die noch flüssige Schwefelschmelze einem Tropfenformer mit einer Temperatur zuzuführen, die nur geringfügig oberhalb der Erstarrungstemperatur von Schwefel liegt. Dies kann aber problematisch sein, wenn die Temperatur innerhalb des Kühlers zu weit absinkt, da dann eine Erstarrung innerhalb des Kühlers und damit Verstopfungen zu befürchten sind. Die Erfindung schafft hier dadurch Abhilfe, dass innerhalb der durch den Kühlraum führenden Rohrleitung eine Heizeinrichtung angeordnet ist. Wenn nun die Temperatur des Fluids, insbesondere der Schwefelschmelze, innerhalb der Rohrleitung unter einen vordefinierten Temperaturwert fällt, wird die Heizeinrichtung aktiviert. Das Fluid innerhalb der Rohrleitung wird dadurch ausgehend von der Heizeinrichtung erwärmt und es kann nicht nur verhindert werden, dass sich das Fluid in der Rohrleitung weiter verfestigt, sondern es kann sogar erreicht werden, dass bereits entstandene Verfestigungen innerhalb der Rohrleitung wieder verflüssigt werden. Überraschenderweise ist dabei das Vorsehen von Heizeinrichtungen äußerst vorteilhaft, insbesondere dann, wenn eine Schwefelschmelze gekühlt werden soll. Denn es ist durch die Erfindung erstmals möglich, ohne das Risiko von Verfestigungen innerhalb des Kühlers tragen zu müssen, den Schwefel bis auf eine für die Pastillierung optimale Temperatur herunterzukühlen.

Die Heizeinrichtung kann als Heizleitung ausgebildet sein.

Beispielsweise kann heißes Wasser oder Dampf durch die Heizleitung geleitet werden, um dadurch das Fluid innerhalb der Rohrleitung sehr schnell zu erwärmen und ggf. Verfestigungen wieder zu verflüssigen.

Die Heizleitung kann U-förmig verlaufen und als in die Rohrleitung einschiebbare Heizlanze ausgebildet sein.

Durch Vorsehen einer U-förmigen Heizleitung kann das Heizmedium, beispielsweise Wasser oder Dampf, in einem Kreislauf durch die Heizlanze geführt werden. Indem eine in die Rohrleitung einschiebbare Heizlanze vorgesehen ist, kann die erfindungsgemäße Vorrichtung problemlos hergestellt und vor allem auch gewartet und gereinigt werden.

Die Heizeinrichtung kann als elektrischer Heizstab ausgebildet sein.

Auch mittels eines elektrischen Heizstabes kann das Fluid in der Rohrleitung zuverlässig und schnell erwärmt werden und ggf. können Verfestigungen wieder verflüssigt werden. Auch der elektrische Heizstab kann dabei in Form einer in die Rohrleitung einschiebbaren Heizlanze ausgebildet sein.

Die Heizeinrichtung kann mit Verwirbelungsblechen versehen sein.

Indem an der Heizeinrichtung Verwirbelungsbleche vorgesehen werden, kann ein Wärmeübergang zwischen der Rohrleitung und dem zu kühlenden Fluid einerseits sowie auch zwischen der Heizeinrichtung und dem Fluid andererseits verbessert werden. Einerseits ist dadurch eine bessere Abkühlung und andererseits auch eine schnellere Aufheizung gewährleistet, wenn die Gefahr von Verfestigungen innerhalb der Rohrleitung droht.

Die Verwirbelungsbleche können zwischen den Schenkeln der U-förmig verlaufenden Heizleitung angeordnet sein.

Auf diese Weise kann ein sehr guter Wärmeübergang zwischen den Verwirbelungsblechen und der Heizleitung und gleichzeitig eine mechanisch sehr stabile Befestigung der Verwirbelungsbleche an der Heizleitung sichergestellt werden. Die Verwirbelungsbleche werden dadurch gemeinsam mit der Heizleitung aufgeheizt und sorgen, falls erforderlich, für eine rasche Erwärmung des Fluids innerhalb der Rohrleitung zur Verhinderung von Verfestigungen.

Die Verwirbelungsbleche können in einem Winkel zwischen 30° und 60°, insbesondere 45°, gegen die Strömung des Fluids in der Rohrleitung gerichtet sein.

Eine solche Anordnung der Verwirbelungsbleche hat sich als besonders vorteilhaft herausgestallt, da dadurch ein guter Wärmeübergang zwischen der Rohrleitung und dem Fluid einerseits sowie auch der Heizleitung und den Verwirbelungsblechen und dem Fluid andererseits sichergestellt werden kann.

Die Verwirbelungsbleche können mit der Heizleitung verschweißt oder einstückig mit der Heizleitung ausgebildet sein.

Auf diese Weise kann ein sehr guter Wärmeübergang zwischen der Heizleitung und den Verwirbelungsblechen bei gleichzeitig stabiler mechanischer Befestigung erzielt werden.

Die Rohrleitung kann mehrere geradlinige und durch den Kühlraum geführte Abschnitte aufweisen.

Es hat sich als besonders vorteilhaft herausgestellt, mehrere geradlinige Abschnitte der Rohrleitung im Kühlraum anzuordnen, um auf diese Weise den Kühlraum möglichst gut auszunutzen. Umlenkungen zwischen den einzelnen geradlinigen Abschnitten werden dahingegen vorteilhafterweise außerhalb des Kühlraums angeordnet. Auf diese Weise lässt sich die erfindungsgemäße Vorrichtung leicht montieren und die Rohrleitungen sind vor allem problemlos für eine eventuelle Wartung oder Reinigung zugänglich.

Die mehreren geradlinigen Abschnitte im Kühlraum können in mehreren Lagen übereinander angeordnet sein, wobei wenigstens eine Lage aus mindestens zwei nebeneinander angeordneten geradlinigen Rohrabschnitten gebildet ist und wobei die Rohrabschnitte benachbarter Lagen versetzt zueinander angeordnet sind.

Auf diese Weise kann zum einen eine sehr platzsparende Anordnung der geradlinigen Abschnitte der Rohrleitungen erreicht werden und zum anderen kann eine für das Durchströmen von Kühlluft oder Kühlmittel senkrecht zu den geradlinigen Rohrabschnitten sehr vorteilhafte Anordnung gewählt werden. Denn durch eine solche Anordnung wird vermieden, dass die geradlinigen Rohrabschnitte im Windschatten anderer Rohrabschnitte angeordnet sind. Dadurch kann eine sehr gute und gleichmäßige Kühlwirkung der Kühlluft bzw. des Kühlmittels an allen Rohrabschnitten erreicht werden.

Die Rohrleitung kann wenigstens abschnittsweise auf ihrer Außenseite mit Kühlrippen versehen sein.

Auf diese Weise kann ein Wärmeübergang zwischen dem Kühlmedium und der Rohrleitung verbessert werden.

Das Kühlmedium kann Luft sein.

Luft als Kühlmedium ist üblicherweise problemlos vorhanden und es muss nicht unbedingt auf einen geschlossenen Kreislauf des Kühlmediums geachtet werden.

Die Heizleitung kann mit heißem Wasser oder Wasserdampf gespeist sein.

Gemäß der Erfindung wird die Heizleitung nur dann aktiviert, wenn die Gefahr von Verfestigungen innerhalb der Rohrleitung besteht. In diesem Fall ist ein schnelles Aufheizen des Fluids vorteilhaft, um die Gefahr von Verfestigungen schnell zu bannen oder bereits entstandene Verfestigungen wieder schnell aufzuschmelzen. Die Verwendung von heißem Wasser oder heißem Wasserdampf kann eine solche schnelle Aufheizung der Heizleitungen sicherstellen.

Die Rohrleitung kann mit wenigstens einem Flansch zum Befestigen eines Flansches der Heizeinrichtung versehen sein.

Auf diese Weise kann die Heizeinrichtung, die vorteilhafterweise als Heizlanze ausgebildet ist, in besonders einfacher Weise montiert werden. Beispielsweise ist der Flansch der Rohrleitung in Verlängerung eines geraden Rohrabschnitts vorgesehen, so dass die Heizeinrichtung problemlos eingeschoben werden kann.

Das der Erfindung zugrundeliegende Problem wird durch ein Verfahren zum Kühlen eines in einem vordefinierten Temperaturbereich verfestigenden Fluids, insbesondere einer Schmelze, gelöst, bei dem die Schritte Leiten des Fluids durch wenigstens eine Rohrleitung eines Kühlers, wobei die Rohrleitung von einem Kühlmedium umgeben ist, und Erfassen einer Temperatur des Fluids im Bereich der Rohrleitung, sowie Aufheizen des Fluids in der Rohrleitung mittels einer Heizeinrichtung, die innerhalb der Rohrleitung angeordnet ist, wenn das Fluid im Bereich der Rohrleitung eine vordefinierte Temperatur unterschreitet, vorgesehen sind.

Erfindungsgemäß wird somit die Heizeinrichtung erst dann aktiviert, wenn das abzukühlende Fluid im Bereich der Rohrleitung eine vordefinierte Temperatur unterschreitet und somit die Gefahr von Verfestigungen innerhalb der Rohrleitung besteht. Auf diese Weise kann ein Fluid, beispielsweise eine Schwefelschmelze, bis knapp über einen Temperaturbereich abgekühlt werden, in dem die Schwefelschmelze dann verfestigt. Dies ist nur deshalb möglich, da über die Heizeinrichtung sofort gegengesteuert und die Schwefelschmelze wieder erhitzt werden kann, wenn die Gefahr von Verfestigungen innerhalb der Rohrleitung droht. Das erfindungsgemäße Verfahren ermöglicht es somit, ein Fluid, insbesondere eine Schmelze, beispielsweise eine Schwefelschmelze, bis kurz über den vordefinierten Temperaturbereich, in dem das Fluid verfestigt, abzukühlen. Auf diese Weise kann eine an das Abkühlen des Fluids folgende weitere Bearbeitung stark verbessert werden. Im Falle einer Schwefelschmelze kann dadurch das Pastillieren der Schwefelschmelze in einem Tropfenformer stark verbessert werden.

In Weiterbildung der Erfindung ist das Erzeugen von Turbulenz innerhalb der Rohrleitung vorgesehen.

Das Erzeugen einer turbulenten Strömung des Fluids innerhalb der Rohrleitung sorgt einerseits für einen guten Wärmeübergang zwischen der Rohrleitung und dem Fluid und andererseits auch für einen guten Wärmeübergang zwischen der Heizeinrichtung und dem Fluid.

In Weiterbildung der Erfindung ist das Aufheizen von auf der Heizeinrichtung angeordneten Verwirbelungsblechen vorgesehen.

Auf diese Weise kann das Fluid innerhalb der Rohrleitung bei drohenden Verfestigungen noch schneller aufgeheizt werden, da die Fläche der Verwirbelungsbleche zusätzlich zur Fläche der Heizeinrichtung für den Wärmeübergang zur Verfügung steht.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen Ausführungsformen können dabei in beliebiger Weise miteinander kombiniert werden, ohne den Rahmen der Erfindung zu überschreiten. In den Zeichnungen zeigen:
- Fig. 1: eine Ansicht einer Vorrichtung gemäß einer ersten Ausführungsform von schräg oben,
- Fig. 2: eine Seitenansicht der Vorrichtung der Fig. 1,
- Fig. 3: eine Draufsicht auf die Schnittebene A-A in Fig. 2,
- Fig. 4: eine Ansicht der Vorrichtung der Fig. 1 in teilweise zerlegtem Zustand,
- Fig. 5: eine Ansicht einer Heizlanze für die Vorrichtung der Fig. 1 von schräg oben,
- Fig. 6: eine Draufsicht auf eine zweite Heizlanze für die Vorrichtung der Fig. 1,
- Fig. 7: eine Draufsicht auf die Heizlanze der Fig. 5,
- Fig. 8: eine Seitenansicht der Heizlanze der Fig. 5 und
- Fig. 9: eine schematische Darstellung einer Anordnung zum Pastillieren von Schwefel mit der Kühlvorrichtung.

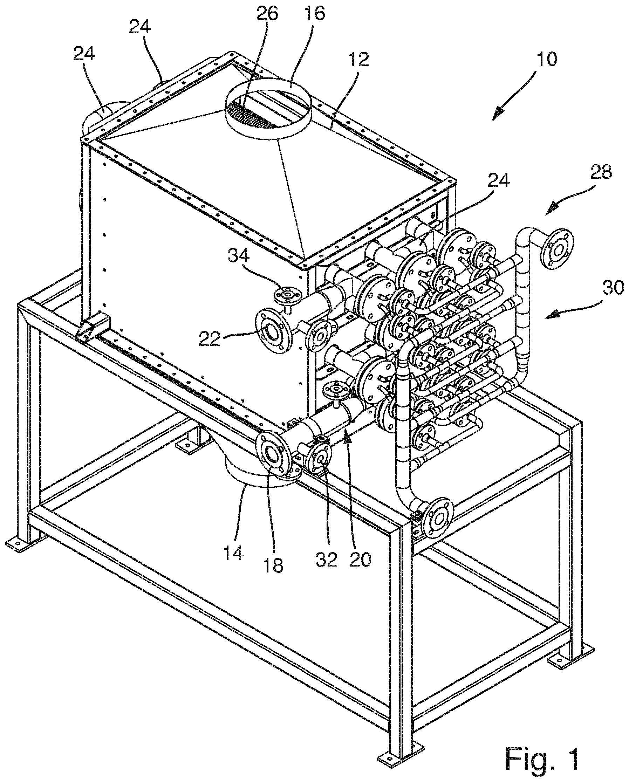

Die Darstellung der Fig. 1 zeigt eine Vorrichtung 10 zum Kühlen eines Fluids, insbesondere einer Schwefelschmelze. Die Vorrichtung 10 kann aber beispielsweise auch für andere Schmelzen oder auch andere Fluide eingesetzt werden, die innerhalb eines vordefinierten Temperaturbereichs verfestigen. Beispiele für andere Fluide sind beispielsweise Mischungen aus Festkörpern und Flüssigkeiten, sogenannte Slurries.

Die Vorrichtung 10 weist einen Kühlraum 12 auf, der durch Seitenwände sowie einen Boden und einen Deckel begrenzt ist. Der Boden und der Deckel weisen jeweils eine Lufteinlassöffnung 14 bzw. 16 auf, durch die Kühlluft durch den Kühlraum 12 hindurch gefördert wird. Gebläse zum Fördern der Kühlluft sind der Übersichtlichkeit halber in Fig. 1 nicht dargestellt.

Ein abzukühlendes Fluid, beispielsweise eine Schwefelschmelze, wird in ein Eintrittsende 18 einer Rohrleitung 20 eingeführt, die mäanderförmig verläuft und an einem Austrittsende 22 endet. Die Rohrleitung 20 weist dabei mehrere geradlinige Abschnitte auf, die innerhalb des Kühlraums 12 angeordnet sind, sowie mehrere Umlenkungen 24, die außerhalb des Kühlraums 12 angeordnet sind. Innerhalb des Kühlraums sind die geradlinigen Abschnitte der Rohrleitung 20 mit Kühlrippen 26 versehen, um einen guten Wärmeübergang zwischen der Kühlluft im Kühlraum 12 und der Rohrleitung 20 sicherzustellen.

In die geradlinigen Abschnitte der Rohrleitung 20 sind jeweils Heizlanzen 28 eingeführt, die in der Darstellung der Fig. 1 lediglich abschnittsweise erkennbar sind und die mit Heißdampf gespeist werden. Der Heißdampf wird über Rohrleitungen 30 in die Heizlanzen 28 eingespeist. Dargestellt ist lediglich ein Teil der Rohrleitungen 30, die mit einem nicht dargestellten Dampfkreislauf verbunden sind.

Mit der Vorrichtung 10 soll ein Fluid, insbesondere eine Schwefelschmelze oder andere Schmelzen, bis auf eine Temperatur abgekühlt werden, die nur geringfügig oberhalb eines Temperaturbereichs liegt, in dem das Fluid oder die Schmelze verfestigt. Diese Abkühlung des Fluids wird mittels der durch den Kühlraum 12 hindurchgeförderten Kühlluft bewirkt. Aufgrund der Abkühlung bis unmittelbar oberhalb des Temperaturbereichs, in dem das Fluid verfestigt, besteht die Gefahr, dass das Fluid bereits in der Rohrleitung 20 verfestigt und diese dadurch blockiert bzw. im teilweise verfestigten Zustand einer Nachbearbeitung, beispielsweise einer Pastillierung, zugeführt wird. Um dies zu vermeiden und dadurch die Abkühlung des Fluids bis unmittelbar oberhalb des Temperaturbereichs, in dem das Fluid verfestigt, zu ermöglichen, sind die Heizlanzen 28 vorgesehen. Eine Temperatur des Fluids wird am Eintrittsende 18 der Rohrleitung 20 sowie am Austrittsende 22 der Rohrleitung gemessen. Dort sind jeweils Flansche 32 bzw. 34 vorgesehen, in die ein Temperatursensor eingeschoben werden kann. Sinkt die Temperatur am Austrittsende 22 unter einen vordefinierten Wert, erkennt eine nicht dargestellte Steuerung, dass die Gefahr von Verfestigungen in der Rohrleitung 20 besteht. In diesem Fall werden die Rohrleitungen 30 und somit die Heizleitungen 28 mit Heißdampf beaufschlagt, um die Temperatur des Fluids innerhalb der Rohrleitung 20 anzuheben, um damit die Gefahr von Verfestigungen zu bannen und auch um eventuell bereits entstandene Verfestigungen wieder zu verflüssigen.

Durch Vorsehen von Heizleitungen innerhalb der Rohrleitung 20 bzw. der Heizlanzen 28 kann daher die erfindungsgemäße Vorrichtung 10 so betrieben werden, dass eine Temperatur des Fluids, insbesondere einer Schwefelschmelze, am Austrittsende 22 der Rohrleitung 20 unmittelbar oberhalb eines Temperaturbereichs liegt, in dem das Fluid verfestigt. Am Beispiel einer Schwefelschmelze ist es mit der erfindungsgemäßen Vorrichtung 10 möglich, die Schwefelschmelze am Austrittsende 22 auf eine Temperatur von 125 °C abzukühlen. Dies ist mit der erfindungsgemäßen Vorrichtung 10 möglich, obwohl die Verfestigungstemperatur bzw. Erstarrungstemperatur von Schwefel in einem Bereich zwischen 117 °C und 119 °C liegt. Eine Temperatur der Schwefelschmelze von 125 °C ist optimal, um die Schwefelschmelze nachfolgend mittels eines Tropfenformers zu pastillieren.

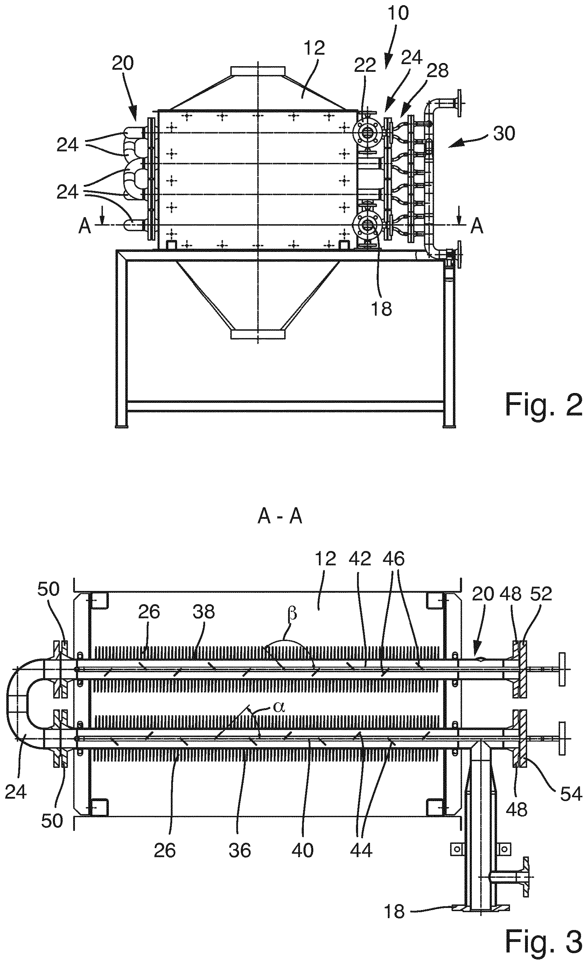

Die Darstellung der Fig. 2 zeigt die Vorrichtung 10 in einer Seitenansicht. Zu erkennen ist, dass die Umlenkungen 24 der Rohrleitung 20 außerhalb des Kühlraums 12 angeordnet sind, siehe auch Fig. 3. Die in Fig. 2 links angeordneten U-förmigen Umlenkungen 24 sind jeweils an geradlinige Abschnitte der Rohrleitung 20 angeflanscht, so dass sie zu Reinigungs- oder Inspektionszwecken in einfacher Weise abgenommen werden können. Innerhalb des Kühlraums 12 sind daher lediglich geradlinige Abschnitte der Rohrleitung 20 angeordnet. Insgesamt verläuft die Rohrleitung 20 mäanderförmig, wobei, wie ausgeführt wurde, lediglich die geradlinigen Abschnitte der Rohrleitung 20 innerhalb des Kühlraums 12 angeordnet sind.

In der Darstellung der Fig. 2 sind die Rohrleitungen 30 zu erkennen, die zum Zuführen von heißem Dampf oder heißem Wasser zu den Heizlanzen 28 dienen.

Die Darstellung der Fig. 3 zeigt eine Draufsicht auf die Schnittebene A-A in Fig. 2. Zu erkennen ist ein Teil der Rohrleitung 20, speziell der Teil, der sich an das Eintrittsende 18 der Rohrleitung anschließt. Ausgehend vom Eintrittsende 18 wird das zu kühlende Fluid zunächst um 90° umgelenkt und gelangt in einen ersten geradlinigen Abschnitt 36 der Rohrleitung 20. Dieser geradlinige Abschnitt 36 ist im Kühlraum 12 angeordnet und an seinem Außenumfang mit Kühlrippen 26 versehen. Ausgehend von dem geradlinigen Abschnitt 36 gelangt das Fluid dann in die Umlenkung 24, wird um 180° umgelenkt und gelangt von dort aus in einen weiteren geradlinigen Abschnitt 38 der Rohrleitung 20, der an seinem Außenumfang ebenfalls mit Kühlrippen 26 versehen ist. Außerhalb des Kühlraums 12 wird das Fluid dann nach oben, also aus der Zeichenebene heraus umgelenkt, siehe auch Fig. 2, was allerdings in Fig. 3 nicht erkennbar ist.

Innerhalb des geradlinigen Abschnitts 26 ist eine erste Heizlanze 40 zu erkennen und innerhalb des geradlinigen Abschnitts 38 ist eine weitere Heizlanze 42 zu erkennen. Die Heizlanzen 40, 42 weisen jeweils mehrere voneinander beabstandete Verwirbelungsbleche 44 bzw. 46 auf. Die Heizlanzen 40, 42 unterscheiden sich durch die Anordnung der Verwirbelungsbleche 44, 46. Speziell sind die Verwirbelungsbleche 44 der Heizlanze 40 in einem Winkel α gegen die Strömung ausgerichtet, die in dem geradlinigen Abschnitt 36 in der Fig. 3 von rechts nach links verläuft. Dieser Winkel α liegt vorteilhafterweise zwischen 30° und 60°, insbesondere 45°. Die Verwirbelungsbleche 44 sorgen für eine Verwirbelung des Fluids innerhalb des Abschnitts 36 der Rohrleitung 20, insbesondere für eine turbulente Strömung des Fluids innerhalb des Abschnitts 36. Dadurch wird der Wärmeübergang zwischen dem Abschnitt 36 der Rohrleitung 20 einerseits sowie auch zwischen der Heizlanze 40 bzw. den Verwirbelungsbleichen 44 und dem Fluid andererseits verbessert.

Die Verwirbelungsbleche 46 der Heizlanze 42 sind ebenfalls gegen die Strömung gerichtet, die im Abschnitt 38 der Rohrleitung 20 in der Fig. 3 von links nach rechts verläuft. Der Winkel β, der wie der Winkel α gegen den Uhrzeigersinn zu der jeweiligen Heizlanze 40, 42 gemessen wird, beträgt in diesem Fall aber zwischen 120° und 150°, insbesondere 135°. Im Ergebnis trifft das Fluid aber sowohl im Abschnitt 36 als auch im Abschnitt 38 der Rohrleitung 20 unter einem Winkel zwischen 30° und 60°, insbesondere 45°, auf die Verwirbelungsbleche 44, 46 auf.

Fig. 3 ist weiter zu entnehmen, dass die Rohrleitung 20 in dem außerhalb des Kühlraums 12 liegenden Bereich jeweils mit Flanschen 48 bzw. 50 versehen ist. Die Flansche 48 liegen in Fig. 3 rechts des Kühlraums 12, die Flansche 50 links des Kühlraums 12. Zwischen den Flanschen 48, 50 liegt jeweils ein geradliniger Abschnitt 36, 38 der Rohrleitung 20. An den Flanschen 48 können passende Flansche 52 bzw. 54 der Heizlanzen 42 bzw. 40 befestigt werden. Es ist dadurch möglich, die Heizlanzen 40, 42 geradlinig auszuführen und diese können in einfacher Weise in die Rohrleitung 20 eingeschoben und dort befestigt werden.

Die Flansche 50 dienen zur Befestigung der Umlenkungen 24.

Sind die Umlenkungen 24 abgenommen und auch die Heizlanzen 40, 42 aus der Rohrleitung 20 entfernt, kann diese in besonders einfacher Weise gewartet, insbesondere gereinigt werden.

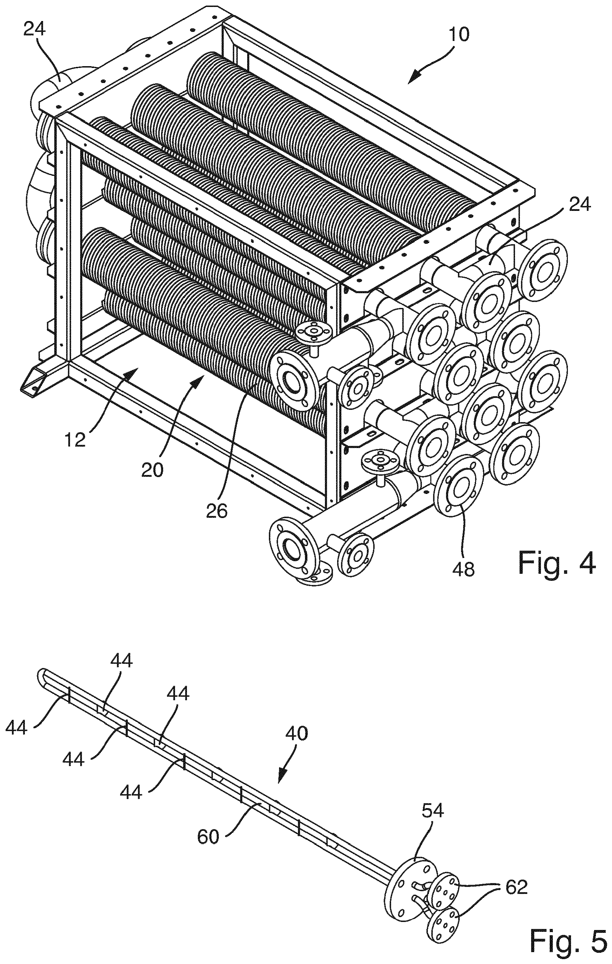

Die Darstellung der Fig. 4 zeigt die Vorrichtung 10 der Fig. 1 in teilweise demontiertem Zustand. Speziell sind die Seitenwände sowie der Deckel und der Boden des Kühlraums 12 abgenommen und auch die Rohrleitung 30 und die Heizlanzen 28 sind nicht dargestellt. Innerhalb des Kühlraums 12 sind insgesamt 10 geradlinige Abschnitte der Rohrleitung 20 angeordnet, wobei alle diese geradlinigen Abschnitte mit Kühlrippen 26 versehen sind. Von unten nach oben gesehen sind in der untersten Lage zwei geradlinige Abschnitte angeordnet, in der darüber folgenden Lage sind drei geradlinige Abschnitte nebeneinander angeordnet. Darüber folgen wieder zwei geradlinige Abschnitte, zuoberst sind wiederum drei geradlinige Abschnitte der Rohrleitung 20 horizontal nebeneinander angeordnet. Diese Anordnung zeichnet sich somit dadurch aus, dass die geradlinigen Abschnitte der Rohrleitung 20 versetzt übereinander angeordnet sind. Die Kühlluft kann dadurch um die geradlinigen Rohrabschnitte bzw. zwischen den Kühlrippen 26 hindurchstreichen, so dass ein sehr guter Wärmeübergang zwischen der Kühlluft und den Kühlrippen 26 sichergestellt ist. Die geradlinigen Abschnitte aller Lagen sind in Reihe untereinander verbunden. Somit ergibt sich ein einziger, nicht verzweigter Strömungspfad durch den Kühlraum 12.

Wie Fig. 4 zu entnehmen ist, sind lediglich die geradlinigen Abschnitte der Rohrleitung 20 innerhalb des Kühlraums 12 angeordnet, die Umlenkungen 24 sind dahingegen jeweils außerhalb des Kühlraums 12 angeordnet.

Die Darstellung der Fig. 5 zeigt die Heizlanze 40 aus Fig. 3. Die Heizlanze 40 weist den Flansch 54 auf, mit dem sie, siehe Fig. 3, an dem Flansch 48 der Rohrleitung 20 befestigt wird. Die Heizlanze 40 weist eine U-förmig verlaufende Heizleitung 60 auf, die zwei voneinander beabstandete Schenkel aufweist. Zwischen den Schenkeln der Heizleitung 60 sind die Verwirbelungsbleche 44 angeordnet, die, wie bereits erläutert wurde, gegen die Strömung gerichtet sind. Die Heizleitung 60 ist am freien Ende ihrer beiden Schenkel jeweils mit einem Anschlussflansch 62 versehen. Die Anschlussflansche 62 werden mit der Rohrleitung 30 verbunden, siehe Fig. 1 und Fig. 2, um die Heizleitung 60 mit heißem Wasser oder heißem Dampf zu versorgen.

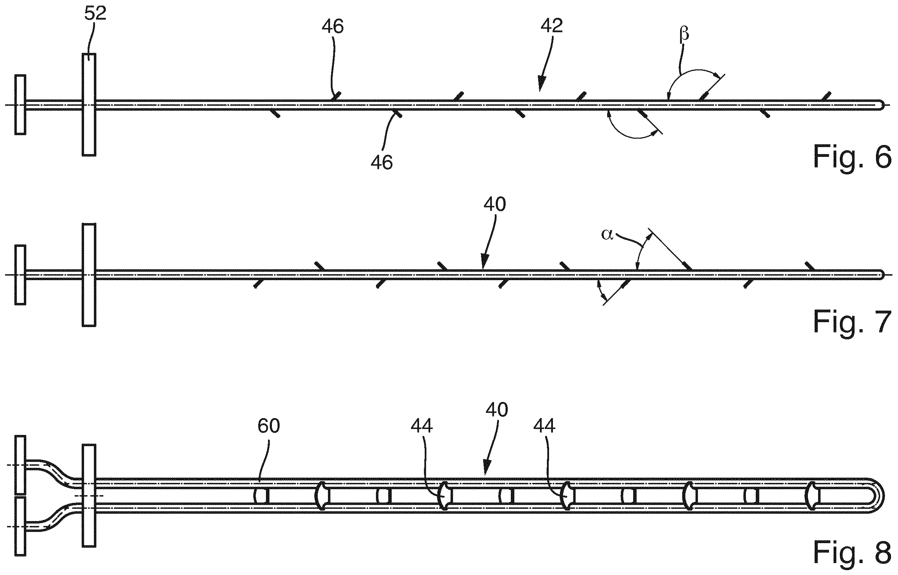

Die Darstellung der Fig. 6 zeigt eine Draufsicht auf die Heizlanze 42 aus Fig. 3. Wie bereits ausgeführt wurde, ist die Heizlanze 42 bis auf die Anordnung der Verwirbelungsbleche 46 identisch zur Heizlanze 40 ausgebildet. Die Verwirbelungsbleche 46 sind, wie die Verwirbelungsbleche 44 der Heizlanze 40, zwischen den Schenkeln der Heizleitung 60 angeordnet und mit diesen beispielsweise verschweißt oder verlötet. Lediglich der Winkel, den die Verwirbelungsbleche 44 bzw. 46 mit der jeweiligen Heizleitung 60 einschließen, unterscheidet sich, so dass die Verwirbelungsbleche 44, 46 immer gegen die Strömung des Fluids in dem zugeordneten Abschnitt der Rohrleitung 20 gerichtet sind.

Die Darstellung der Fig. 7 zeigt die Heizlanze 40 der Fig. 5 von oben.

Fig. 8 zeigt die Heizlanze 40 der Fig. 5 und 7 von der Seite. Zu erkennen ist in dieser Ansicht, dass die Verwirbelungsbleche 44 zwischen den Schenkeln der Heizleitung 60 angeordnet sind. Die Verwirbelungsbleche 44 sind mit der Heizleitung 60 beispielsweise verlötet oder verschweißt, so dass ein guter Wärmeübergang zwischen der Heizleitung 60 und den Verwirbelungsblechen 44 vorliegt. Die Verwirbelungsbleche 44, wie auch die Verwirbelungsbleche 46 der Heizlanze 42, dienen dadurch nicht nur zum Erzeugen einer verwirbelten Strömung in der Rohrleitung 20, sondern gleichzeitig auch noch dazu, die Wärmeenergie der Heizleitung 60 auf das in der Rohrleitung 20 strömende Fluid zu übertragen.

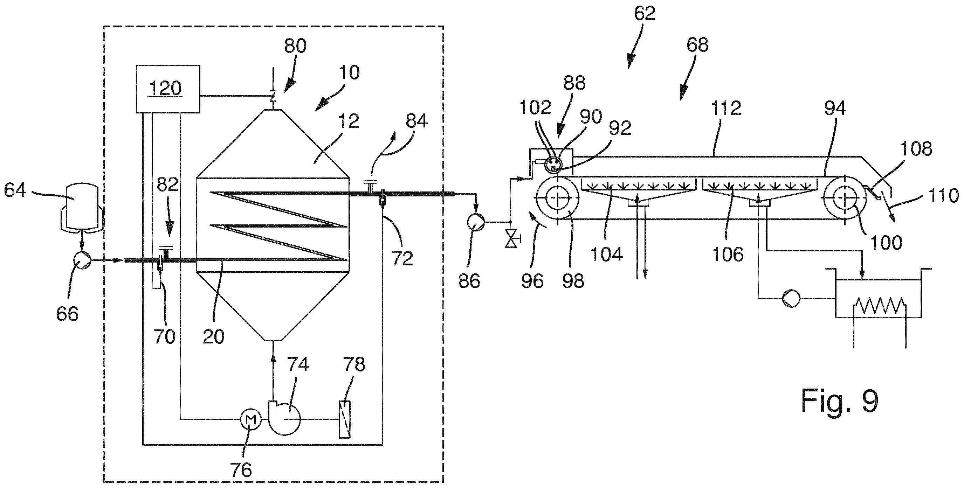

Die Darstellung der Fig. 9 zeigt schematisch eine Vorrichtung 62 zum Pastillieren von Schwefel. Die Vorrichtung 10 zum Kühlen einer Schwefelschmelze ist Teil dieser Einrichtung 62. Eine Schwefelschmelze wird durch eine Vorrichtung 64 bereitgestellt, die in Fig. 9 nicht weiter ausgeführt ist. Diese Schwefelschmelze weist eine Temperatur von etwa 150 °C auf. Die Schwefelschmelze wird mit einer Pumpe 66 zu der erfindungsgemäßen Vorrichtung 10 gefördert. Eine Temperatur der Schwefelschmelze von 150 °C ist für den optimalen Betrieb einer Pastillierungseinrichtung 68 zu hoch. Optimal ist eine Temperatur der Schwefelschmelze von 125 °C, um eine gute Pastillenqualität und einen hohen Durchsatz der Pastilliereinrichtung 68 sicherstellen zu können. Die Schwefelschmelze wird daher über die Vorrichtung 10 geführt, um die Schwefelschmelze auf eine Temperatur von 125 °C abzukühlen. Eine Temperatur der Schwefelschmelze stromaufwärts der Vorrichtung 10 wird dabei an einer Stelle 70 stromaufwärts der Vorrichtung 10 sowie an einer weiteren Stelle 72 stromabwärts der Vorrichtung 10 erfasst. Die Vorrichtung 10 weist, wie bereits beschrieben wurde, den Kühlraum 12 auf, durch den die Rohrleitung 20 geführt ist. Durch den Kühlraum 12 wird, in Fig. 9 von unten nach oben, Kühlluft mittels eines Gebläses 74 gefördert. Das Gebläse 74 wird mittels eines Motors 76 angetrieben und saugt die Kühlluft über einen Luftfilter 78 an. Oberhalb des Kühlraums 12 ist eine Klappe 80 angeordnet, mit der ein Kühlluftstrom durch den Kühlraum 12 gegebenenfalls verringert oder abgesperrt werden kann.

In den geradlinigen Abschnitten der Rohrleitung 20 sind, wie bereits erörtert wurde, Heizlanzen angeordnet, mit denen die Schwefelschmelze innerhalb der Rohrleitung 20 gegebenenfalls erwärmt werden kann. Eine Zufuhr von Heißdampf zu diesen Heizlanzen bzw. die Abfuhr des Heißdampfes von den Heizlanzen ist in Fig. 9 lediglich schematisch durch die Pfeile 82, 84 angedeutet. Der genaue Aufbau der Heizlanzen sowie der Rohrleitung 30 zum Zuführen von Heißdampf bzw. heißem Wasser wurde bereits anhand der Fig. 1 und 2 beschrieben.

Stromabwärts der Vorrichtung 10 wird die nun auf eine Temperatur von 125 °C abgekühlte Schwefelschmelze mittels einer weiteren Pumpe 86 zu einem Tropfenformer 88 geführt. Die Pumpe 86 ist dabei nicht unbedingt erforderlich und kann auch entfallen. Der Tropfenformer 88 weist eine rotierende, gelochte Außentrommel 90 und eine an der Innenseite der Außentrommel 90 anliegende Düsenleiste 92 auf. Durch die Düsenleiste 92 wird die Schwefelschmelze gegen die rotierende Außentrommel 90 gedrückt, so dass durch die rotierende Außentrommel 90 Tropfen der Schwefelschmelze erzeugt werden. Diese Schwefelschmelzetropfen werden auf einem umlaufenden Stahlband 94 abgelegt, das in Richtung des Pfeils 96 um zwei Trommeln 98 bzw. 100 umläuft. Innerhalb des Tropfenformers 88 sind Heizkanäle 102 vorgesehen, um den Tropfenformer 88 und speziell die darin befindliche Schwefelschmelze auf einer Temperatur von etwa 125° zu halten, um also zu verhindern, dass die Schwefelschmelze bereits innerhalb des Tropfenformers 88 verfestigt.

Die auf dem Stahlband 94 abgelegten Schwefelschmelzetropfen verfestigen auf dem Stahlband 94, während sie, in Fig. 9 von links nach rechts, auf dem Obertrum des Stahlbands 94 weitertransportiert werden. Das Stahlband 94 wird hierzu mittels Sprühdüsen 104 und 106 von unten gekühlt. An der in Fig. 9 rechten Umlenktrommel 100 sind die Schwefelschmelzetropfen zu Pastillen verfestigt und können im Bereich der Umlenktrommel 100 mittels eines Abnahmemessers 108 vom Stahlband 94 abgenommen werden und werden dann gemäß einem Pfeil 110 einer Weiterverarbeitung zugeführt, beispielsweise verpackt. Oberhalb des Tropfenformers 88 und oberhalb des Stahlbands 94 ist eine Haube 112 angeordnet, um konstante Temperaturen oberhalb des Stahlbands 94 sicherzustellen.

Da die Schwefelschmelze dem Tropfenformer 88 mit einer Temperatur von 125 °C zugeführt wird, kann dieser im optimalen Temperaturbereich arbeiten und die Pastilliervorrichtung 68 kann mit hohem Durchsatz betrieben werden und gleichzeitig kann eine sehr gute Pastillenqualität erzielt werden.

Um ein Verstopfen der Vorrichtung 10 zu verhindern und dennoch die Schwefelschmelze mit einer Temperatur von 125 °C dem Tropfenformer 88 zuführen zu können, wird die Temperatur wenigstens an der Stelle 72 stromabwärts der Vorrichtung 10 in der Rohrleitung 20 erfasst. Sinkt die Temperatur der Schwefelschmelze an der Stelle 72 unter einen vordefinierten Temperaturwert, beispielsweise 125 °C, verursacht eine nicht dargestellte Steuerung, dass die Heizlanzen in der Rohrleitung 20 mit Heizdampf beaufschlagt werden, um die Schwefelschmelze innerhalb der Rohrleitung 20 möglichst schnell wieder auf eine Temperatur zu bringen, bei der keine Verfestigungen innerhalb der Rohrleitung 20 zu befürchten sind. Gleichzeitig kann die nicht dargestellte Steuerung beispielsweise auch eine Kühlluftmenge über eine Ansteuerung des Motors 76 des Gebläses 74 und/oder über eine Einstellung der Klappe 80 beeinflussen. Der Vorteil der erfindungsgemäß vorgesehenen Heizleitungen innerhalb der Rohrleitung 20 ist aber, dass zum einen eine sehr schnelle Regelung der Temperatur der Schwefelschmelze in der Rohrleitung 20 erzielt werden kann und dass sogar bereits entstandene Verfestigungen innerhalb der Rohrleitung 20 wieder aufgeschmolzen werden können.

Die Vorrichtung 10 zum Kühlen einer Schwefelschmelze ist in der Darstellung der Fig. 9 von einer gestrichelten Linie umgeben. Damit soll angedeutet werden, dass die Vorrichtung 10 ein von der Vorrichtung 62 abtrennbares Modul bildet. Zwar ist es möglich, einen übergeordneten Prozessrechner für die Steuerung der Vorrichtung 62 vorzusehen, der dann auch die Steuerung bzw. Regelung der Vorrichtung 10 übernimmt. Bei der dargestellten Ausführungsform ist die Vorrichtung 10 aber mit einer eigenen zentralen Steuerung 120 versehen, die letztendlich den Betrieb der Vorrichtung 10 steuert bzw. regelt und dafür sorgt, dass ein in die Vorrichtung 10 hineinströmendes Fluid mit einer vordefinierten Temperatur die Vorrichtung 10 wieder verlässt.

Hierzu erhält die Steuerung 120 Eingangssignale von den Temperatursensoren 70, 72. Die Steuerung 120 verarbeitet diese Temperatursignale und steuert in Abhängigkeit dieser Temperatursignale den Motor 76, der das Kühlluftgebläse 74 beaufschlagt. Darüber hinaus steuert die Steuerung 120 auch die Klappe 80 an der stromabwärts gelegenen Seite des Kühlraums 12 an. Mit der Steuerung 120 kann dadurch in Abhängigkeit der mittels der Temperatursensoren 70, 72 erfassten Temperaturen ein Kühlluftstrom durch den Kühlraum 12 gesteuert werden. In einem Normalbetrieb erfolgt die Regelung der Temperatur am Sensor 72, also am Ausgang der Vorrichtung 10, lediglich mittels einer Veränderung der Kühlluftmenge, die durch den Kühlraum 12 strömt, also mittels einer Einstellung des Motors 76 und der Klappe 80. Lediglich dann, wenn die vom Sensor 72 erfaßte Temperatur eine vordefinierte Temperatur unterschreitet, wird eine Heizeinrichtung in der Rohrleitung im Kühlraum 12 aktiviert, die elektrische Heizstäbe oder Heizlanzen aufweisen kann, wie sie im Zusammenhang mit dem Ausführungsbeispiel der Fig. 1 bis 8 beschrieben wurden. Diese in Form von Heizlanzen ausgebildeten Heizleitungen werden mit Heißdampf beaufschlagt, wie in Fig. 9 lediglich schematisch mittels der Pfeile 82, 84 angedeutet ist. Das Zuführen von Heißdampf erfolgt ebenfalls durch Ansteuerung der zentralen Steuerung 120, wobei der Übersichtlichkeit halber die hierfür erforderlichen Ventile und sonstigen Mittel in Fig. 9 nicht dargestellt sind.

Durch Vorsehen der zentralen Steuerung 120 wird aber eine Vorrichtung 10 bereitgestellt, die als Modul eingesetzt werden kann und die zum Bereitstellen eines Fluids mit vorgegebener Temperatur an seinem Ausgang keinen übergeordneten Prozessrechner benötigt.

## Patentansprüche

1. Verfahren zum Kühlen eines in einem vordefinierten Temperaturbereich verfestigenden Fluids, insbesondere einer Schmelze, mit den Schritten Leiten des Fluids durch wenigstens eine Rohrleitung (20) einer Kühlvorrichtung, wobei die Rohrleitung (20) von einem Kühlmedium umgeben ist, Erfassen einer Temperatur des Fluids im Bereich der Rohrleitung (20), und Aufheizen des Fluids in der Rohrleitung (20) mittels einer Heizeinrichtung, die innerhalb der Rohrleitung (20) angeordnet ist, wenn das Fluid im Bereich der Rohrleitung (20) eine vordefinierte Temperatur unterschreitet, **dadurch gekennzeichnet, dass** die Rohrleitung (20) mäanderförmig verläuft und mehrere geradlinige und durch den Kühlraum (12) geführte Abschnitte (38, 36) aufweist.

2. Verfahren nach Anspruch 1, **gekennzeichnet durch** Erzeugen von Turbulenz innerhalb der Rohrleitung (20).

3. Verfahren nach Anspruch 1 oder 2, **gekennzeichnet durch** Aufheizen von auf der Heizeinrichtung angeordneten Verwirbelungsblechen (44, 46).

## Claims

1. Method for cooling a fluid that solidifies in a predefined temperature range, in particular a melt, having the steps of routing the fluid through at least one pipeline (20) of a cooling device, wherein the pipeline (20) is surrounded by a coolant, detecting a temperature of the fluid in the region of the pipeline (20), and heating the fluid in the pipeline (20) by means of a heating device which is arranged within the pipeline (20) in the event of the fluid in the region of the pipeline (20) dropping below a predefined temperature, **characterized in that** the pipeline (20) has a meandering course and has multiple straight portions (38, 36) guided through the cooling chamber (12).

2. Method according to Claim 1, **characterized by** generating turbulence within the pipeline (20).

3. Method according to Claim 1 or 2, **characterized by** heating baffles (44, 46) arranged on the heating device.

## Revendications

1. Procédé de refroidissement d'un fluide, notamment une matière en fusion, qui se solidifie dans une gamme de température prédéfinie, ledit procédé comprenant les étapes suivantes :
diriger le fluide à travers au moins une canalisation (20) d'un dispositif de refroidissement, la canalisation (20) étant entourée par un milieu de refroidissement,
détecter la température du fluide dans la zone de la canalisation (20), et
chauffer le fluide dans la canalisation (20) au moyen d'un dispositif de chauffage qui est disposé à l'intérieur de la canalisation (20) lorsque le fluide dans la zone de la canalisation (20) tombe au-dessous d'une température prédéfinie, **caractérisé en ce que** la canalisation (20) s'étend de manière sinueuse et comporte plusieurs portions droites (38, 36) guidées à travers la chambre de refroidissement (12).

2. Procédé selon la revendication 1, **caractérisé par** la génération de turbulences à l'intérieur de la canalisation (20).

3. Procédé selon la revendication 1 ou 2, **caractérisé par** le chauffage de tôles de turbulence (44, 46) disposées sur le dispositif de chauffage.
